# EUROPEAN PATENT APPLICATION

(11) **EP 4 404 401 A2**
(43) Date of publication of application: **24.07.2024**
(21) Application number: 24174411.9
(22) Date of filing: 12.09.2017
(51) Int. Cl.: H01T 4/06

(54) **SURGE PROTECTIVE DEVICE MODULES AND DIN RAIL DEVICE SYSTEMS INCLUDING SAME**

(30) Priority: 30.11.2016 US 201615365453
(62) Divisional of application: 17190722.3
(71) Applicant: Raycap, Surge Protective Devices, Ltd., 1218 Komenda (SI)
(72) Inventor: KAMENSEK, Sebastjan, 4220 Skofja (SI); KNEZ, Tadej, 1290 Grosuplje (SI); JURICEV, Igor, 6310 Izola (SI); VUKOTIC, Milenko, 1000 Ljubljana (SI); TSOVILIS, Thomas, 1000 Ljubljana (SI); POLITIS, Zafiris G., 14565 St. Stefanos (GR)
(74) Representative: Yeadon IP Limited

(57) **Abstract**

A surge protective device (SPD) module includes a module housing, first and second module electrical terminals mounted on the module housing, a gas discharge tube (GDT) mounted in the module housing, and a fail-safe mechanism mounted in the module housing. The GDT includes a first GDT terminal electrically connected to the first module electrical terminal and a second GDT terminal electrically connected to the second module electrical terminal. The fail-safe mechanism includes: an electrically conductive shorting bar positioned in a ready position and repositionable to a shorting position; a biasing member applying a biasing load to the shorting bar to direct the shorting bar from the ready position to the shorting position; and a meltable member. The meltable member maintains the shorting bar in the ready position and melts in response to a prescribed temperature to permit the shorting bar to transition from the ready position to the shorting position under the biasing load of the biasing member. In the shorting position, the shorting bar forms an electrical short circuit between the first and second GDT terminals to bypass the GDT.

## Description

### Field of the Invention

The present disclosure relates to surge protective devices and, more particularly, to connector systems, fail-safe mechanisms, and alerting mechanisms for surge protective device modules. This application claims priority from US Patent Application No. US15/365,453, filed 30th November 2016, the entire contents of which are expressly incorporated herein by reference.

### Background of the Invention

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges and resulting down time may be very costly. Typically, sensitive electronic equipment may be protected against transient overvoltages and surge currents using surge protective devices (SPDs).

Overvoltage protection devices, circuit breakers, fuses, ground connections and the like are often mounted on DIN (Deutsches Institut für Normung e.V.) rails. DIN rails may serve as mounting brackets of standardized dimensions so that such electrical control devices may be sized and configured to be readily and securely mounted to a support surface such as an electrical service utility box.

It is an aim of embodiments of the invention to improve upon such known devices.

### Summary

According to embodiments of the disclosure, a surge protective device (SPD) module includes a module housing, first and second module electrical terminals mounted on the module housing, a gas discharge tube (GDT) mounted in the module housing, and a fail-safe mechanism mounted in the module housing. The GDT may include a first GDT terminal electrically connected to the first module electrical terminal and a second GDT terminal electrically connected to the second module electrical terminal. The fail-safe mechanism may include one or more of: an electrically conductive shorting bar positioned in a ready position and repositionable to a shorting position; a biasing member applying a biasing load to the shorting bar to direct the shorting bar from the ready position to the shorting position; and a meltable member. The meltable member may be arrange to maintain the shorting bar in the ready position and to melt in response to a prescribed temperature to permit the shorting bar to transition from the ready position to the shorting position under the biasing load of the biasing member. In the shorting position, the shorting bar may form an electrical short circuit between the first and second GDT terminals to bypass the GDT.

In some embodiments, the SPD module includes: a first carrier contact member including a first shorting portion electrically connected to the first GDT terminal; and a second carrier contact member including a second shorting portion electrically connected to the second GDT terminal. In the ready position, the meltable member may hold the shorting bar spaced apart from and electrically isolated from the first and second shorting portions. When the meltable member melts, the biasing member may forcibly displace the shorting bar into contact with each of the first and second shorting portions to form the electrical short circuit between the first and second GDT terminals to bypass the GDT.

In some embodiments, the first carrier contact member includes a first GDT mount hole, the second carrier contact member includes a second GDT mount hole. The first GDT terminal may be seated in the first GDT mount hole and secured therein by solder in the first GDT mount hole. The second GDT terminal may be seated in the second GDT mount hole and secured therein by solder in the second GDT mount hole.

In some embodiments, the meltable member is formed of metal. In some embodiments, the meltable member has a melting point in the range of from about 90° C to 240° C.

According to some embodiments, the SPD module includes an alarm mechanism responsive to melting of the meltable member to provide an alert that the SPD module has failed.

In some embodiments, the alarm mechanism includes a local alarm mechanism including: a window defined in the module housing; an indicator member movable between first and second positions relative to the window; an indicator biasing member applying a biasing load to the indicator member to direct the indicator member from the first position to the second position; and a trigger member. The trigger member may retain the indicator member in the first position. When the meltable member melts, the trigger member may release the indicator member to move from the first position to the second position under the biasing load of the indicator biasing member.

In some embodiments, the alarm mechanism includes a remote alarm mechanism including: a port defined in the module housing to receive a remote control pin; and an indicator member having an indicator hole defined therein. The indicator member may be movable between a first position, wherein the indicator member covers the port, and a second position, wherein the indicator opening is aligned with the port and permits the remote control pin to extend through the indicator opening. When the meltable member melts, the indicator member may be moved from the first position to the second position under the biasing load of the biasing member.

According to some embodiments, the first and second module terminals are bullet connectors.

In some embodiments, the SPD module includes: a first carrier contact member electrically connecting the first GDT terminal to the first module terminal; and a second carrier contact member electrically connecting the second GDT terminal to the second module terminal. The first module terminal may be orbitally riveted to the first carrier contact member. The second module terminal may be orbitally riveted to the second carrier contact member.

According to some embodiments, a DIN rail surge protective device (SPD) system includes a base, an SPD module and an electrical connector system to selectively electrically connect the SPD module to the base. The base may be configured to be mounted on a DIN rail. The base may define a receiver slot. The SPD module may be configured to be removably mounted in the receiver slot to form with the base a DIN rail SPD assembly. The electrical connector system may include: a socket connector affixed on one of the base and the SPD module, the socket connector defining a socket; and a bullet connector on the other of the base and the SPD module. The bullet connector may include a post body configured to be received in the socket to electrically and mechanically connect the SPD module to the base.

In some embodiments, the socket and the post body are substantially cylindrical.

In some embodiments, the socket connector includes a plurality of circumferentially distributed, radially deflectable, electrically conductive contact fingers. The contact fingers may define the socket.

In some embodiments, the socket connector includes slots between the contact fingers to permit the contact fingers to deflect independently of one another.

In some embodiments, the socket connector is orbitally riveted to an electrically conductive terminal support.

According to some embodiments, the bullet connector is orbitally riveted to an electrically conductive terminal support.

According to some embodiments, the socket connector forms a part of the base.

In some embodiments, the bullet connector forms a part of the SPD module.

According to some embodiments, the base includes a base terminal connector assembly including: the socket connector; a connector body, wherein the socket connector is mounted on the connector body; and a cable clamp connector electrically and mechanically joined to the socket connector by the connector body.

In some embodiments, the cable clamp connector includes: a cable termination portion of the connector body; a cage member; and a threaded member operable to displace the cage member relative to the cable termination portion to clamp a cable therebetween.

According to some embodiments, the cable termination portion is monolithic and forms a loop defining a cavity.

In some embodiments, the cable termination portion includes: first and second walls; a key slot defined in the first wall; and an integral key tab. The key tab extends from the second wall and is interlocked with the key slot to inhibit or prevent the first and second walls from separating.

According to some embodiments, the cage member is monolithic, forms a loop defining a cavity, and surrounds a portion of the cable termination portion.

In some embodiments, the cage member includes: first and second walls; a key slot defined in the first wall; and an integral key tab. The key tab may extend from the second wall and may be interlocked with the key slot to inhibit or prevent the first and second walls from separating.

According to some embodiments, the cage member includes an inner front wall, an outer front wall overlying the inner front wall, a hole defined in the outer front wall, and an integral, threaded flange on the inner front wall. The flange may extend into the hole and may be threadedly mated with the threaded member.

According to some embodiments, the connector body includes: a cable termination portion; a socket connector mount portion on which the socket connector is mounted; and a bridge portion connecting the cable termination portion to the socket connector mount portion. The connector body may be monolithic. The bridge portion may have an arcuate cross-sectional profile with an arc radius in the range of from about 5 mm to 6 mm.

According to some embodiments, a surge protective device (SPD) module includes a module housing, first and second module electrical terminals mounted on the module housing, a gas discharge tube (GDT) mounted in the module housing, a trigger member, a trigger biasing member, a meltable member, and a local alarm mechanism. The GDT may include a first GDT terminal electrically connected to the first module electrical terminal and a second GDT terminal electrically connected to the second module electrical terminal. The meltable member may be meltable in response to a prescribed temperature. The local alarm mechanism may include: a window defined in the module housing; an indicator member movable between first and second positions relative to the window; and an indicator biasing member applying a biasing load to the indicator member to direct the indicator member from the first position to the second position. The meltable member may be arranged to retain the trigger member in a lock position, wherein the trigger member retains the indicator member in the first position. When the meltable member melts, the trigger biasing member may force the trigger member from the lock position to a release position, wherein the trigger member releases the indicator member to move from the first position to the second position under the biasing load of the indicator biasing member.

In some embodiments, the SPD module includes a remote alarm mechanism including: a port defined in the module housing to receive a remote control pin; and an indicator member having an indicator hole defined therein. The indicator member may be movable between a first position, wherein the indicator member covers the port, and a second position, wherein the indicator opening is aligned with the port and permits the remote control pin to extend through the indicator opening. When the meltable member melts, the indicator member may be moved from the first position to the second position under the biasing load of the biasing member.

Further features, advantages and details will be appreciated by those of ordinary skill in the art from a reading of the figures and the detailed description of the embodiments that follow. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

Embodiments of the disclosure will now be described, by way of example only, with reference to the accompanying drawings, which form a part of the specification and in which:
**FIG. 1** is a top, front perspective view of a DIN rail device system and a DIN rail device assembly according to embodiments of the disclosure;
**FIG. 2** is an exploded, front perspective view of the DIN rail device system of **FIG. 1****;**
**FIG. 3** is an exploded, rear perspective view of the DIN rail device system of **FIG. 1****;**
**FIG. 4** is a cross-sectional view of the DIN rail device assembly of **FIG. 1** taken along the line **4-4** of **FIG. 1****;**
**FIG. 5** is an exploded, perspective view of a GDT module forming a part of the DIN rail device system of **FIG. 1****;**
**FIGS. 6** and **7** are opposing perspective views of the GDT module of **FIG. 5** with an outer cover thereof removed, wherein a shorting bar of the GDT module is in a ready position and a trigger member of the GDT module is in a lock position;
**FIG. 8** is a perspective view of the GDT module of **FIG. 5** with the outer cover removed, wherein the shorting bar is in a shorting position and the trigger member is in a release position;
**FIG. 9** is a cross-sectional, perspective view of the GDT module of **FIG. 5** with the outer cover removed, wherein the shorting bar is in the shorting position and the trigger member is in the release position;
**FIG. 10** is a front perspective view of a base terminal connector assembly forming a part of a base of the DIN rail device assembly of **FIG. 1****;**
**FIG. 11** is a cross-sectional, perspective view of the base terminal connector assembly of **FIG. 10****;**
**FIG. 12** is an exploded, rear perspective view of the base terminal connector assembly of **FIG. 10****;**
**FIG. 13** is a fragmentary, top plan view of the base terminal connector assembly of **FIG. 10****;**
**FIG. 14** is a side view of a connector body forming a part of the base terminal connector assembly of **FIG. 10****;**
**FIG. 15** is a top perspective view of a cage member forming a part of the base terminal connector assembly of **FIG. 10****;**
**FIG. 16** is a bottom perspective view of the cage member of **FIG. 15****;**
**FIG. 17** is a cross-sectional view of the cage member of **FIG. 15** taken along the line **17-17** of **FIG. 16****;**
**FIG. 18** is a front perspective view of a bullet connector forming a part of the GDT module of **FIG. 5****;**
**FIG. 19** is an enlarged, fragmentary, cross-sectional view of the DIN rail device assembly of **FIG. 1** taken along the line **4-4** of **FIG. 1****;** and
**FIG. 20** is a schematic electrical circuit diagram of an electrical circuit installation including the DIN rail device assembly of **FIG. 1****.**

### Detailed Description of Embodiments

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

Well-known functions or constructions may not be described in detail for brevity and/or clarity.

As used herein the expression "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "monolithic" means an object that is a single, unitary piece formed or composed of a material without joints or seams.

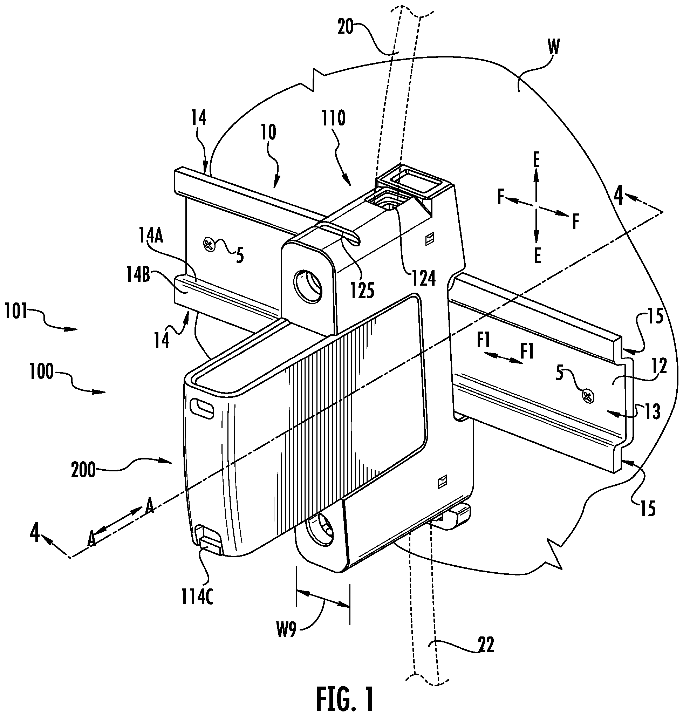

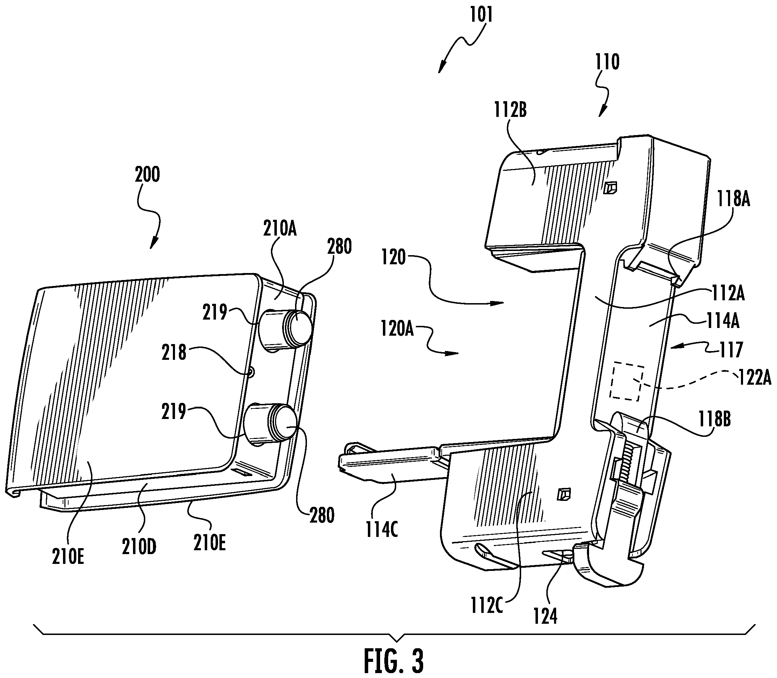

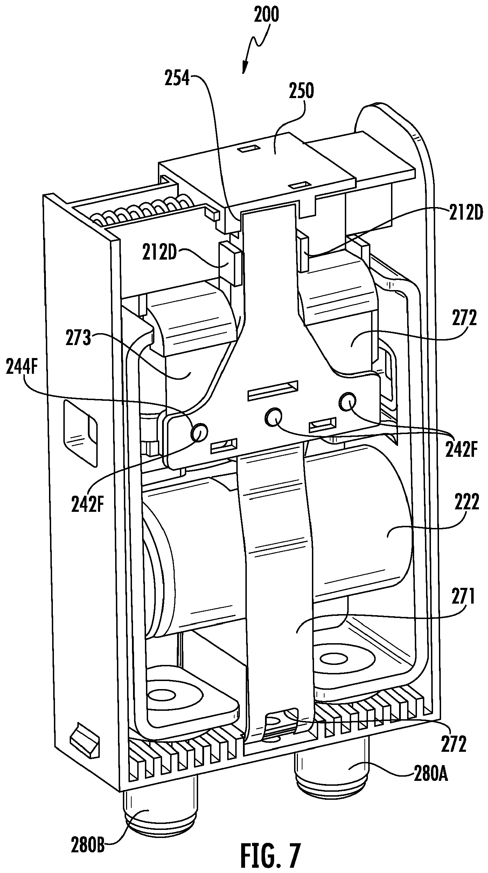

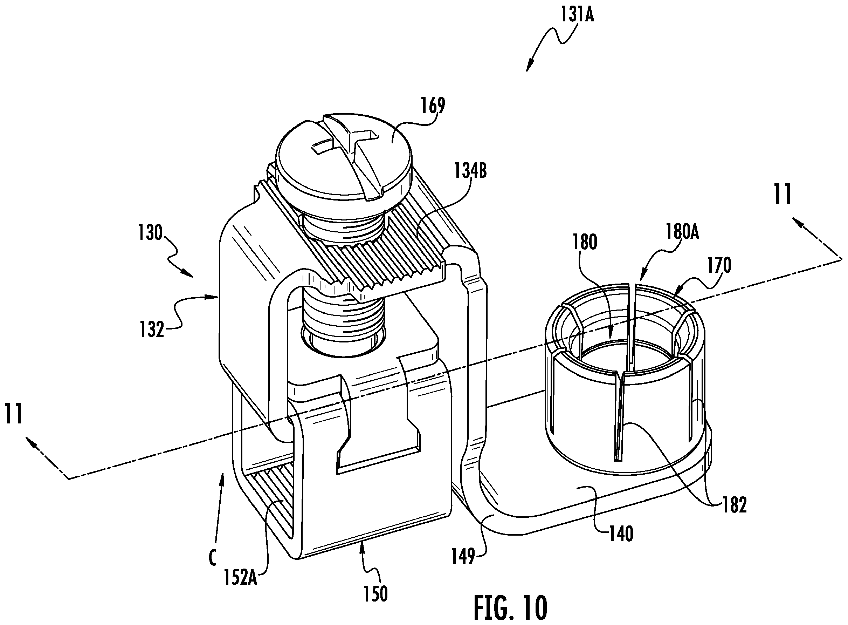

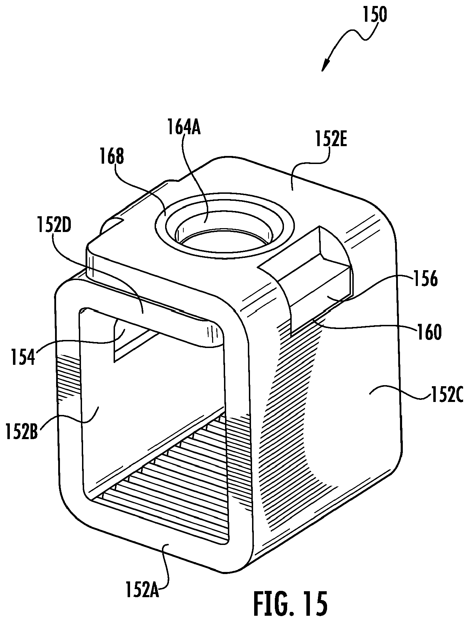

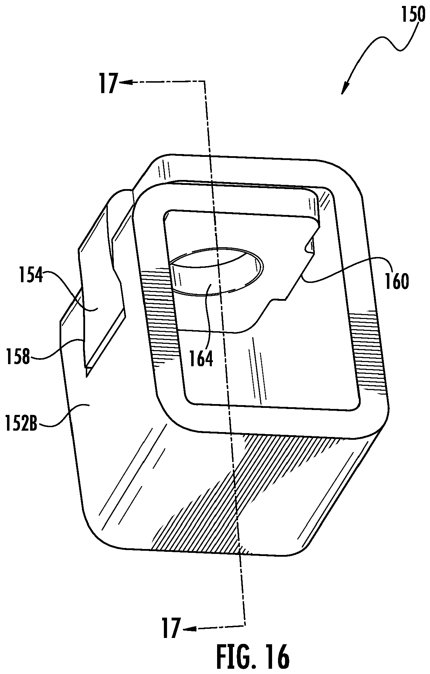

With reference to **FIGS. 1-20****,** a DIN rail surge protective device (SPD) system **101** according to embodiments of the present invention and a DIN rail device mount assembly **100** formed therefrom are shown therein. According to some embodiments and as shown, the assembly **100** is configured, sized and shaped for mounting on a support rail **10** (*e.g*., DIN rail **10** shown in **FIG. 1**) and is compliant with corresponding applicable DIN requirements or standards. The DIN rail **10** may be secured (*e.g*., by screws **5** or other fasteners) to a suitable support structure such as a wall **W**, for example, a rear wall of an electrical service utility cabinet.

As discussed in more detail below, the system **101** includes a pedestal or base **110** that is removably mountable on the DIN rail **10** and a pluggable surge protective device (SPD) module **200** that is in turn removably mountable on the base **110.** The module **200** includes a gas discharge tube (GDT) circuit, a fail-safe mechanism **201,** a local alarm mechanism **203,** and a remote alarm mechanism **205,** as discussed in more detail below. The system **101** also includes an electrical connector system **103,** as discussed in more detail below, for selectively electrically connecting the module **200** to the base **110.**

In some embodiments, the maximum dimensions of the assembly **100** are compliant with at least one of the following DIN Standards: DIN 43 880 (December 1988). In some embodiments, the maximum dimensions of the assembly **100** are compliant with each of these standards.

According to some embodiments and as shown, the rail **10** is a DIN rail. That is, the rail **10** is a rail sized and configured to meet DIN specifications for rails for mounting modular electrical equipment.

The DIN rail **10** has a rear wall **12** and integral, lengthwise flanges **14** extending outwardly from the rear wall **12.** Each flange **14** includes a forwardly extending **wall 14A** and an outwardly extending **wall 14B.** The walls **12, 14** together form a lengthwise extending front, central channel **13** and opposed, lengthwise extending, rear, edge channels **15.** Mounting holes **16** may be provided extending fully through the wall **12** and to receive fasteners (*e.g*., threaded fasteners or rivets) for securing the rail **10** to a support structure (*e.g*., a wall or panel). The DIN rail **10** defines a DIN rail plane **E-F** and has a lengthwise axis **F1-F1** extending in the plane **E-F.** DIN rails of this type may be referred to as "top hat" support rails.

According to some embodiments, the rail **10** is a 35 mm (width) DIN rail. According to some embodiments, the rail **10** is formed of metal and/or a composite or plastic material.

The assembly **100** has a DIN rail device assembly axis **A-A** (**FIG. 1**) that extends transversely to and, in some embodiments, substantially perpendicular to the axis **F1-F1** of the DIN rail **10.** In some embodiments, the DIN rail mount assembly axis **A-A** extends transversely to and, in some embodiments, substantially orthogonal to the plane **E-F** of the DIN rail **10.** As used herein, "front" or "distal" refers to the end farther away from the DIN rail **10** when the assembly **100** is mounted on the DIN rail **10,** and "rear" or "proximal" refers to the end nearer the DIN rail **10.**

The base **110** includes a rear housing member **114A** and a front housing member **114B** collectively forming a housing **112.** The housing **112** includes a rear section **112A,** an upper leg or section **112B,** and a lower leg or section **112C.** The housing **112** defines an enclosed internal cavity **115.** According to some embodiments, the housing members **114A, 114B** are formed of an electrically insulating polymeric material.

A J-shaped clip or lock member **114C** is coupled to the base **110** by a hinge. The lock member **114C** can be selectively interlocked with a cooperating latch feature on the front end of the module **200** to lock the module **200** into the base **110.**

The housing members **114A, 114B** and the lock member **114C** may be formed of any suitable material or materials. In some embodiments, each of the housing members **114A, 114B** and the lock member **114C** are formed of a rigid polymeric material or metal (*e.g*., aluminum). Suitable polymeric materials may include polyamide (PA), polypropylene (PP), polyphenylene sulfide (PPS), or ABS, for example.

A DIN rail receiver channel **117** is defined in the rear side of the rear section **112A.** Integral rail hook features **118A** are located on one side of the channel **117** and a spring loaded DIN rail latch mechanism **118B** is mounted on the other side of the channel **117.** The features and components **117, 118A, 118B** are sized and configured to securely and releasably mount the base **110** on a standard DIN rail **10** as is known in the art.

A receiver slot **120** is defined in the front side of the base **110** by the sections **112A, 112B, 112C.** The receiver slot **120** has a front opening **120A** and is open on either side. The receiver slot **120** extends axially from the opening **120A** along the axis **A-A** and is terminated by the front side of the rear section **112A.**

A base terminal electrical connector assembly **131A, 131B** is mounted in each of the upper and lower sections **112B, 112C.** As discussed in more detail below, each connector assembly **131A, 131B** include a cable clamp connector **133** and a terminal contact connector **170.** The two socket connectors **170** serve as base electrical terminals of the base **110.** A cable port **124** is defined in each of the upper and lower sections **112B, 112C** to receive a terminal end of an electrical cable **20, 22** into the corresponding cable clamp connector **133.** A driver port **126** is provided in each section **112B, 112C** to receive a driver to operate a threaded member (*e.g*., screw) **169** of the associated cable clamp connector **133.**

Upper and lower contact openings **121** are defined in the front side or wall **112E** of the rear section **112A.** The terminal contact connectors **170** extend out of the housing **112** through respective ones of the openings **121.**

A spring-loaded remote control pin **122** projects forwardly from the front side **112E** of the rear section **112A.**

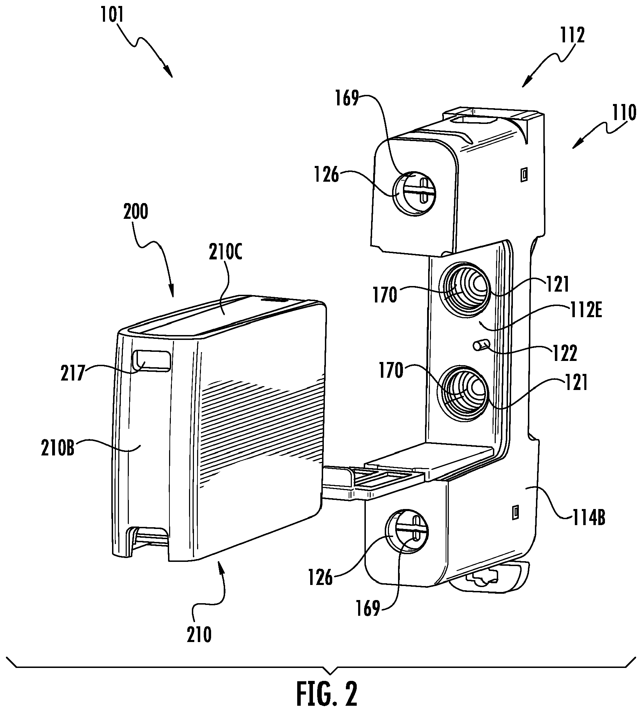

The module **200** includes an inner housing member **212** and an outer housing member **214** collectively forming a housing **210** (**FIG. 2**). The housing **210** defines an internal chamber or cavity **216.** The housing includes a rear wall **210A,** a front wall **210B,** a top wall **210C,** a bottom wall **210D,** and opposed side walls **210E.**

The housing members **212, 214** may be formed of any suitable material or materials. In some embodiments, each of the housing members **212, 214** are formed of a rigid polymeric material. Suitable polymeric materials may include polyamide (PA), polypropylene (PP), polyphenylene sulfide (PPS), or ABS, for example.

A pair of carrier contact members **220,** a GDT **222,** the fail-safe mechanism **201,** and the alarm mechanisms **203, 205** are enclosed within the cavity **216.** The two terminal electrical contact or bullet connectors **280** each extend rearwardly outwardly from the rear wall **210A** and serve as module electrical terminals.

A front indicator opening or window **217** is provided on the front wall **210B.** The indicator window **217** may serve to visually indicate a change in status of the module **200,** as discussed below.

A rear indicator opening or port **218** is provided in the rear wall **210A.** The indicator port **218** may serve to indicate (*e.g*., mechanically, in cooperation with the remote control pin **122**) a change in status of the module **200,** as discussed below.

Terminal contact openings **219** are defined in the rear wall **210A.**

The inner housing member **212** includes a spring channel **212A,** an integral rail **212B,** an indicator wall **212C,** opposed integral trigger guides **212D,** and an indicator strip guide slot **212E.**

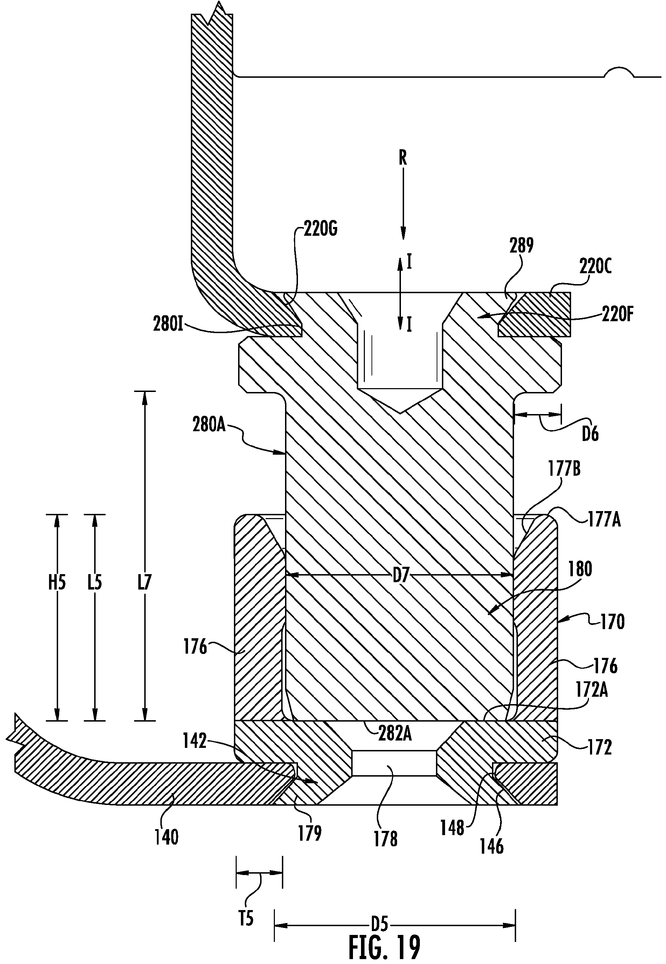

The opposed carrier contact members **220** form a frame on which the GDT **222** is mounted. Each carrier contact member **220** includes a body **220A,** a GDT termination hole **220B,** a connector mount tab **220C,** a fail-safe support tab **220D,** and a shorting tab **220E.** A connector mount hole **220F** is defined in each mount tab **220C.** Each mount hole **220F** has an annular recess or chamfer **220G** (**FIG. 19**).

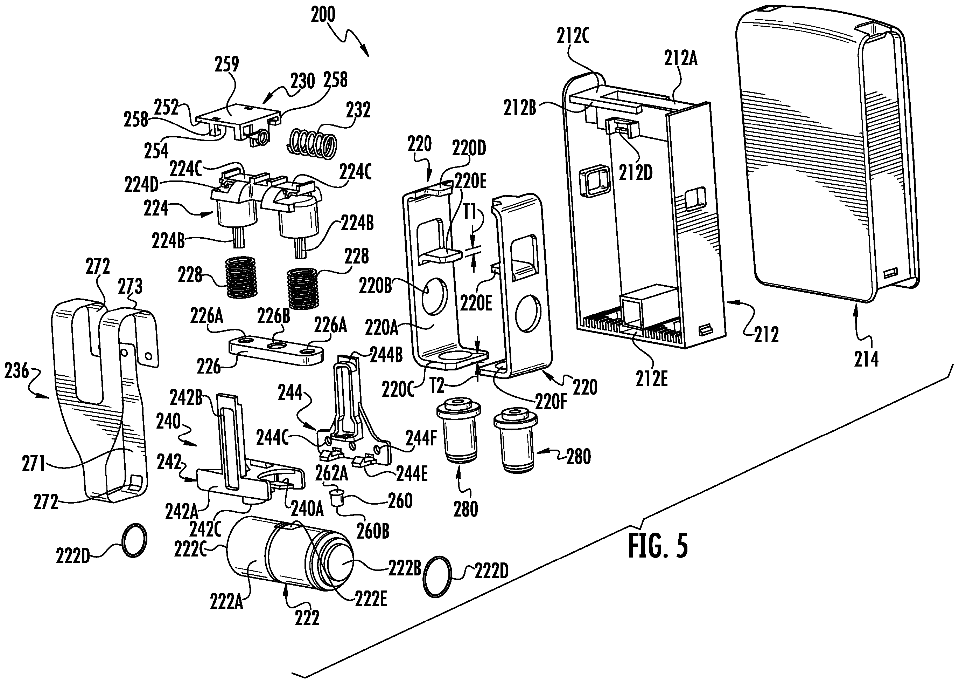

According to some embodiments, each shorting tab **220E** has a thickness **T1** (**FIG. 5**) in the range of from about 0.5 mm to 5 mm.

According to some embodiments, each connector mounting tab **220C** has a thickness **T2** (**FIG. 5**) in the range of from about 0.5 mm to 5 mm.

The GDT includes a body **222A** and an anode terminal **222B** and a cathode terminal **222C** on opposed ends of the body **222A.** The body **222A** contains an anode, a cathode and a spark gap chamber as is known in the art. Suitable GDTs may include EPCOS H30-E800XP type GDTs. Suitable GDTs may include the GasStart 16L33 GDTs rated at impulse currents from 12.5 kA to 150 kA and maximum continuous operating voltage from 240 V to 440 V.

The GDT terminals **222B, 222C** are seated in the opposed GDT termination holes **220B.** The terminals **222B, 222C** mechanically and electrically connected to the opposed carrier contact members **220** by solder **222D** in and/or about the termination holes **220B.** The GDT **222** thereby spans and is electrically connected between the carrier contact members **220.** The terminals **222B, 222C** may instead or additionally be connected to the contact members **220** by riveting, screwing or welding.

In some embodiments, the solder joint is annular with a small annular gap between each terminal **222B, 222C** and its hole **220B.** In some embodiments, the width of the gap is in the range of from about 0.03 mm to 0.3 mm. In some embodiments, the gap is sized such that the solder **222D** is drawn into the joint by capillary effect.

The GDT **222** also includes a locator feature or recess in the side of the body **222A** facing the front end of the module **200.**

The fail-safe mechanism **201** includes a fail-safe housing **224,** a trigger assembly **240,** a shorting member or bar **226,** a pair of trigger springs **228,** and a temperature responsive member **260** (hereinafter referred to as the meltable member). The local alarm mechanism **203** includes the components **224, 240, 228, 234,** an indicator member **230,** and an indicator spring **232.** The remote alarm mechanism **205** includes the components **224, 240, 228, 234,** and an indicator strip **236.**

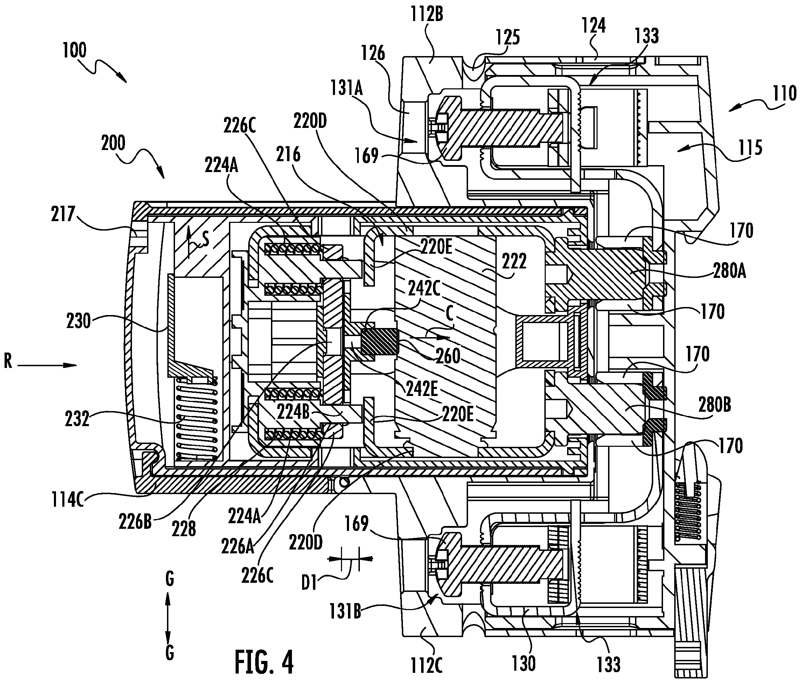

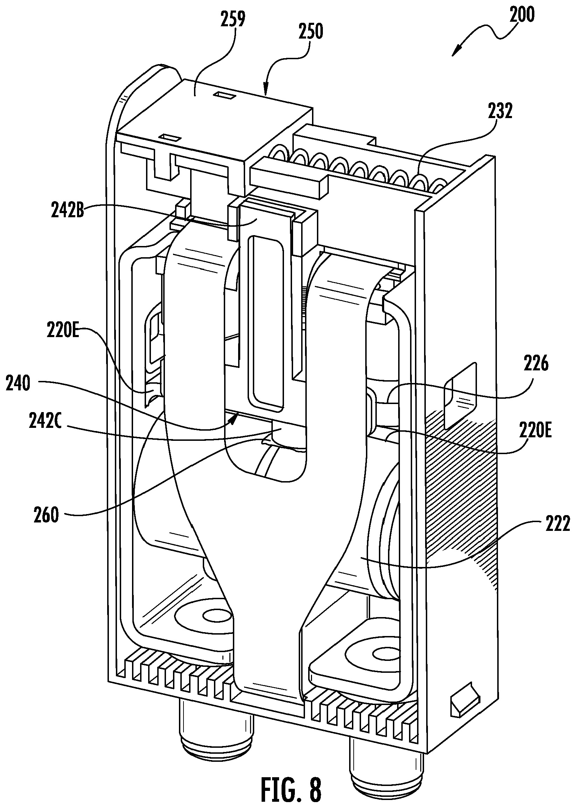

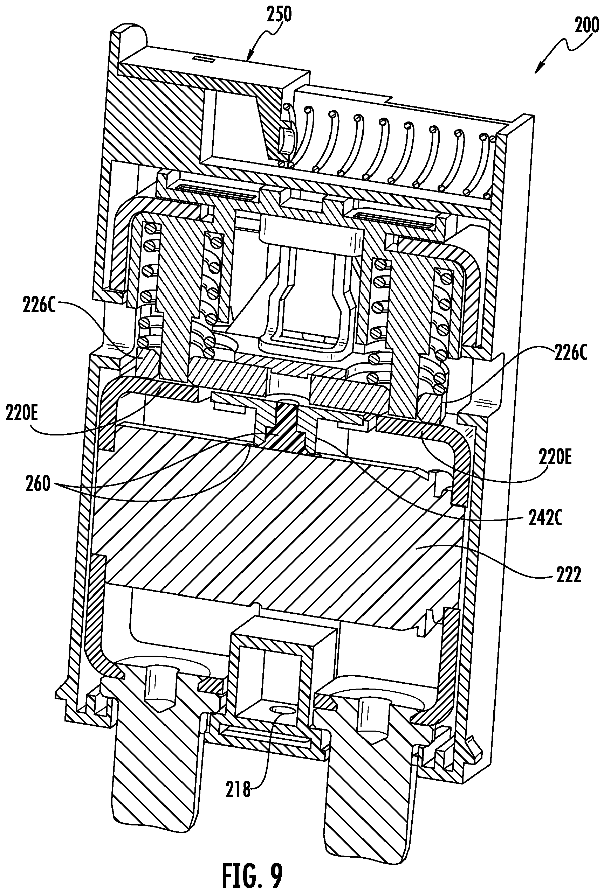

The fail-safe mechanism **201** also includes the shorting tabs **220E.** **FIGS. 4****,** **6** and **7** show the fail-safe mechanism **201** in a ready position or configuration, and **FIGS. 8** and **9** show the fail-safe mechanism **201** in a triggered position or configuration.

The fail-safe housing **224** may be a unitary or monolithic body of electrical insulating material. The housing **224** includes a pair of side-by-side, annular spring slots **224A,** a pair of side-by-side guide posts **224B,** a pair of side-by-side strip guide slots **224C,** and a pair of opposed mount slots **224D.** The mount tabs **220D** are received in the mount slots **224D** to secure the fail-safe housing **224.** The trigger springs **228** are seated in the spring slots **224A.**

The trigger assembly **240** includes a first trigger member **242** and a second trigger member **244.** The trigger member **244** is affixed to the trigger member **242** by integral connector features **244E** (barbed tabs).

The trigger member **242** includes a body **242A** having a shorting bar slot **240A** defined therein. The shorting bar **226** is mounted in the shorting bar slot **240A** for movement with the trigger assembly **240.** The body **242A** also includes an integral meltable member **260** mount slot **242C** on its rear side. The meltable member **260** is mounted in the mount slot **242C.** An overflow hole **242E** is defined in the trigger member **242** in fluid communication with the mount slot **242C.** Strip anchor posts **242F** are provided along the outer edge of the body **242A.** The trigger member **242** includes an integral latch portion or finger **242B** extending forwardly from the body **242A** and slidably seated in the trigger guide **212D** on the same side of the module **200.**

The trigger member **244** similarly includes an integral latch portion or finger **244B** extending forwardly from its body and slidably seated in the opposing trigger guide **212D.** The trigger member **244** includes strip anchor holes **244F** aligned with and receiving the strip anchor posts **242F.**

The shorting bar **226** is formed of an electrically conductive material. In some embodiments, the shorting bar **226** is formed of metal and, in some embodiments, copper. The shorting bar **226** may be generally shaped as an elongate plate or bar (*e.g*., as shown) or may be otherwise suitably shaped. The shorting bar **226** includes opposed contact end sections **226C.** Guide holes **226A** are defined in the end sections **226C.** An overflow hole **226B** is provided in the midsection of the shorting bar **226** in alignment in alignment with the overflow hole **242E.** The shorting bar **226** is mounted in the mount slot **242C** of the trigger member **242** and the guide posts **224B** are slidably received in the guide holes **226A.**

The meltable member **260** has opposed ends **262A** and **262B.** The end **262A** is seated in or on the mount socket **242D** and the end **262B** is seated in or on the locator recess **222E** of the GDT **222.**

When the module **200** is assembled in the ready configuration (**FIGS. 4****,** **6** and **7**), the springs **228** are captured between the shorting bar **226** and the housing **224.** The springs **228** are elastically compressed so that they exert a load against the shorting bar in a rearward direction **R** (**FIG. 4****;** *i.e.*, toward the GDT **222**). The meltable member **260** is thereby captured and axially loaded between the shorting bar **226** and the GDT **222.** The meltable member **260** spaces the shorting bar **226** axially away from the GDT **222** a prescribed distance such that the contact end sections **226C** are axially spaced apart from the shorting tabs **220E** a prescribed distance **D1** (**FIG. 4**). The meltable member **260** is persistently compressively loaded by the springs **228** and the shorting bar **226** is maintained electrically isolated from the carrier contact members **220.**

The indicator member **250** includes a body **252,** opposed integral latch features or slots **254,** mount tabs **258,** and an indicator surface **259.** The indicator member **250** is slidably secured to the rail **212B** to slide along an indicator axis **G-G** (**FIG. 4**). The indicator spring **232** is seated in the spring channel **212A** and one end of the indicator spring **232** engages the indicator member **250.**

When the module **200** is assembled in the ready configuration (**FIGS. 4****,** **6** and **7**), the spring **232** is captured between the end wall of the channel **212A** and the indicator member **250.** The spring **232** is elastically compressed so that it exerts a biasing load against the indicator member **250** in a frontward direction (*i.e.*, toward the window **217**). The latch fingers **242B, 244B** of the trigger assembly **240** are seated in the latch features **254.** The interlocks between the latch fingers **242B, 244B** and the latch features **254** secure the indicator member **250** in the ready position wherein the indicator surface **259** is not aligned with and visible through the window **217.**

The indicator strip **270** includes three integral legs **271, 272, 273.** The leg **271** is routed through the guide slot **212E** and its end is affixed to the trigger assembly **240** by the central features **242F, 244F.** The legs **272, 273** are routed through the guide slots **224C** and their ends are affixed to the trigger assembly **240** by the outer features **242F, 244F.** When the module **200** is assembled in the ready configuration (**FIGS. 4****,** **6** and **7**), the indicator hole **272** is not aligned with (*i.e.*, is offset from) the rear opening **218.** The indicator hole **272** is sized to receive the remote control pin **122** therethrough.

The fail-safe housing **224,** the trigger members **242, 244,** and the indicator member **250** may be formed of any suitable material or materials. In some embodiments, the components **224, 242, 244, 250** are formed of a rigid polymeric material. Suitable polymeric materials may include polyamide (PA), polypropylene (PP), polyphenylene sulfide (PPS), or ABS, for example.

The indicator strip **270** may be formed of any suitable material or materials. In some embodiments, the indicator strip **270** is formed of a resilient, flexible or compliant polymeric material. Suitable polymeric materials may include polyimide (kapton), PVC, ABS or PPS, for example.

The meltable member **260** may be formed of any suitable material or materials. In some embodiments, the meltable member **260** is formed of metal. Suitable metal materials may include alloys based on Bismuth and/or Indium and/or lead, for example. According to some embodiments, the meltable member **260** has a melting point in the range of from about 90° C to 240° C and, in some embodiments, in the range of from about 120° C to 150° C.

The connector system **103** includes both a pair of base terminal connector assemblies **131A, 131B** each forming a part of the base **110** and a pair of contact plug or bullet connectors **280A, 280B** each forming a part of the module **200.** Each connector assembly **131A, 131B** includes a socket connector **170.** When the module **200** is properly installed in the slot **120** of the base **110,** the bullet connector **280A** is inserted into and mechanically and electrically engages the socket connector **170** of the connector assembly **131A,** and the bullet connector **280B** is inserted into and mechanically and electrically engages the socket connector **170** of the connector assembly **131B.** The bullet connectors **280A, 280B** can be repeatedly inserted into and removed from the associated socket connectors **170.** Each connector assembly **131A, 131B** is also configured to mechanically and electrically engage an electrical cable **20, 22** (**FIG. 1**) inserted through a corresponding cable port **124.**

The connector assembly **131A** will be described in more detail hereinbelow. The connector assembly **131B** may be constructed and operated in the same manner as the connector assembly **131A,** and it will therefore be appreciated that the description below likewise applies to the connector assembly **131B.**

The connector assembly **131A** includes a connector body **130,** a cage member **150,** a threaded member **169,** and a socket connector **170.** In some embodiments, the threaded member **169** is a screw, as shown. The screw can be differently configured.

The connector body **130** is electrically conductive. The connector body **130** includes a cable termination portion **132,** a module termination portion **140,** and a bridge portion **149.** The connector body **130** is formed of an electrically conductive material. In some embodiments, the connector body **130** is formed of metal. Suitable metals may include alloys of copper or CuZn and/or Sn. In some embodiments, the connector body **130** is unitary and, in some embodiments, the connector body **130** is monolithic.

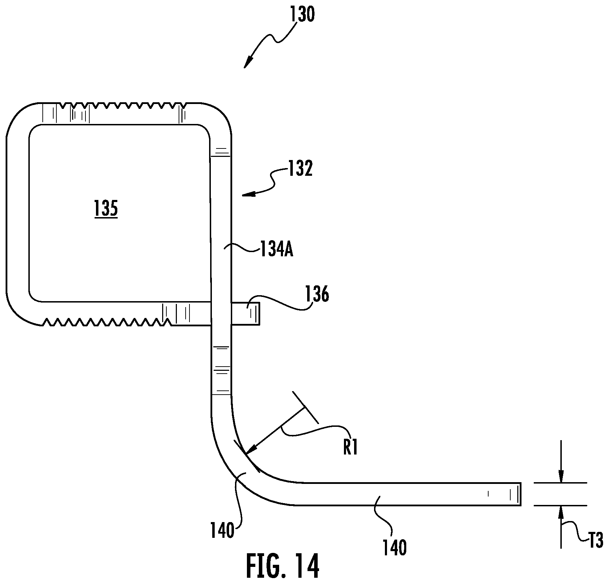

According to some embodiments, the cable termination portion **132** and the bridge portion **149** each have a thickness **T3** (**FIG. 14**) in the range of from about 0.4 mm to 5 mm.

The cable termination portion **132** includes a loop defining a cavity **135.** A key slot **137** is defined in a bottom wall **134B** of the portion **132** and a key tab **136** extends from a terminal edge of a rear wall **134A** of the portion **132.** The key tab **136** has an enlarged head **136A** that is wider than the portion of the key slot **137** in which the key tab **136** is seated. The key tab **136** and the key slot **137** interlock to resist or prevent the end of the rear wall **134A** from pulling away from the bottom wall **134B.** A non-threaded screw hole **138** is defined in a front wall **134C.**

A mounting hole **142** is defined in the module termination portion **140** by an annular inner edge **148.** A chamfer recess **146** surrounds the mounting hole **142.**

The bridge portion **149** is curvilinear in profile. In some embodiments and as shown, the profile of the bridge portion **149** is a smooth curve (*i.e.*, the curved section forming the bridge portion **149** does not have a corner or corners). In some embodiments and as shown, the profile of the bridge portion **149** has an arc radius **R1** (**FIG. 14**) in the range of from about 1 mm to 30 mm. In some embodiments and as shown, the profile of the bridge portion **149** has an arc length in the range of from about 5 mm to 6 mm.

The cage member **150** includes a rear wall **152A,** opposed side walls **152B, 152C,** an inner front wall **152D,** and an outer front wall **152E** defining a cavity **151.** An integral key tab **154** extends from a terminal edge of the outer front wall **152E.** An integral straight tab **156** extends from a terminal edge of the inner front wall **152D.** A key slot **158** is defined in the side wall **152B** and a straight slot **160** is defined in the side wall **152C.** A non-threaded through hole **162** is defined in the outer front wall **152E.** An integral flange **168** projects forwardly from the inner front wall **152D** and is seated in the hole **162.** A threaded through hole **164** is defined the flange **168** and the inner front wall **152D.** Screw threads **164A** are formed on the inner surface of the hole **164.**

The key tab **154** is interlocked with the key slot **158** and the straight tab **156** is seated in the slot **160.** These engagements, as well as the interlock between the flange **168** and the hole **162,** resist or prevent the walls **152A-E** from pulling away from one another.

The cage member **150** is electrically conductive. In some embodiments, the cage member **150** is formed of metal. Suitable metals may include alloys of copper such as CuZn or alloys of iron. In some embodiments, the cage member **150** is unitary and, in some embodiments, the cage member **150** is monolithic.

In some embodiments, the cage member **150** is formed from single sheet of metal that is bent to the shape of the cage member **150.** The flange **168** may be formed using a deep draw process.

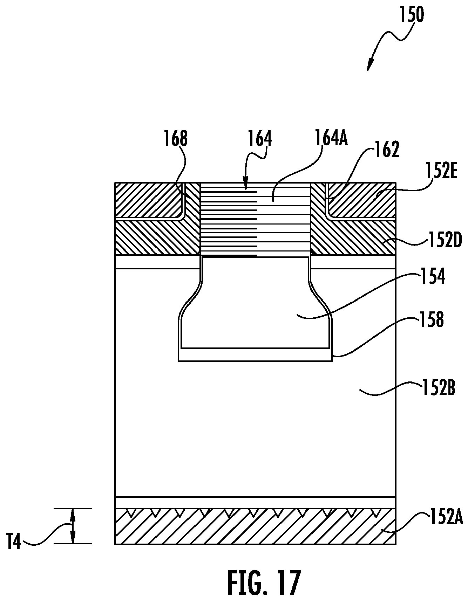

According to some embodiments, each of the walls **152A-E** has a thickness **T4** (**FIG. 17**) in the range of from about 0.5 mm to 5 mm.

The cage member **150** encircles the rear wall **134A** of the connector body **130.** The screw **169** extends through the hole **138** and is threadedly mated with the hole **164.** In use, the screw **169** can be rotated to drive the screw **169** into the cage member **150** through the hole **164,** thereby pulling the cage member **150** in a direction **C** toward the front wall **134B.** In that way, the walls **134A** and **152A** are pulled together to capture and compressively load a cable end therebetween.

The socket connector **170** includes a body **172,** an integral mount feature or flange **174,** and six integral fingers **176.** The body **172** includes a base wall **172A.** A through hole **178** extends through the base wall **172** and flange **174.**

Each finger **176** is cantilevered and extends forwardly from a base end **176A** merged with the body **172** at the base wall **172A** to a free end **176B.** Each free end **176B** has a rounded entry surface **177A** and a ramped inner shoulder surface **177B.** The fingers **176** are circumferentially distributed about the base wall **172A** such that the fingers **176** and the base wall **172A** collectively define a socket **180** having an opening **180A.** The socket **180** is substantially cylindrical. The fingers **176** are radially deflectable. Slots **182** are defined between the side edges of adjacent fingers **176** to permit the fingers **176** to radially deflect independently of one another.

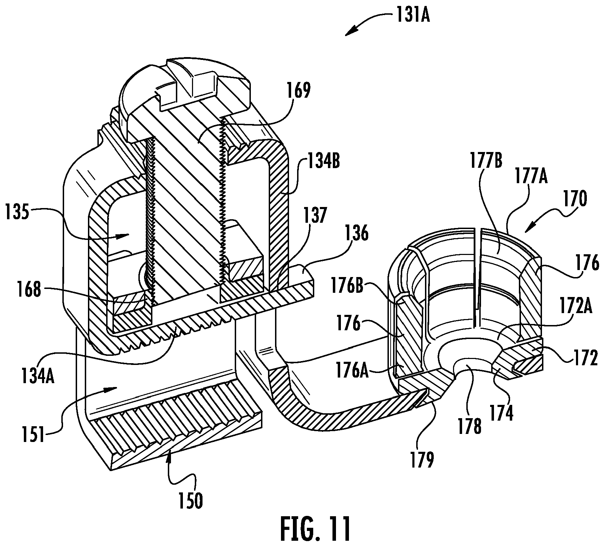

The socket connector **170** is secured or affixed directly to the portion **140** by the mount flange **174.** In some embodiments and as shown in **FIGS. 11** and **19****,** the mount flange **174** is seated in the hole **142** and is orbital riveted to the portion **140.** More particularly, an integral, annular flared or deformed portion **179** of the flange **174** is shaped or formed (*e.g*., cold formed) by an orbital riveting technique and apparatus and fills the chamfer recess **146.** The outer diameter of the deformed portion **179** is greater than the diameter of the inner edge **148,** so that the deformed portion **179** prevents the socket connector **170** from being displaced from the hole **142.** In some embodiments, the orbital riveting process is executed such that the body **172** fits flush or tightly against the facing surface of the portion **140.** In some embodiments, the deformed portion **179** is tubular.

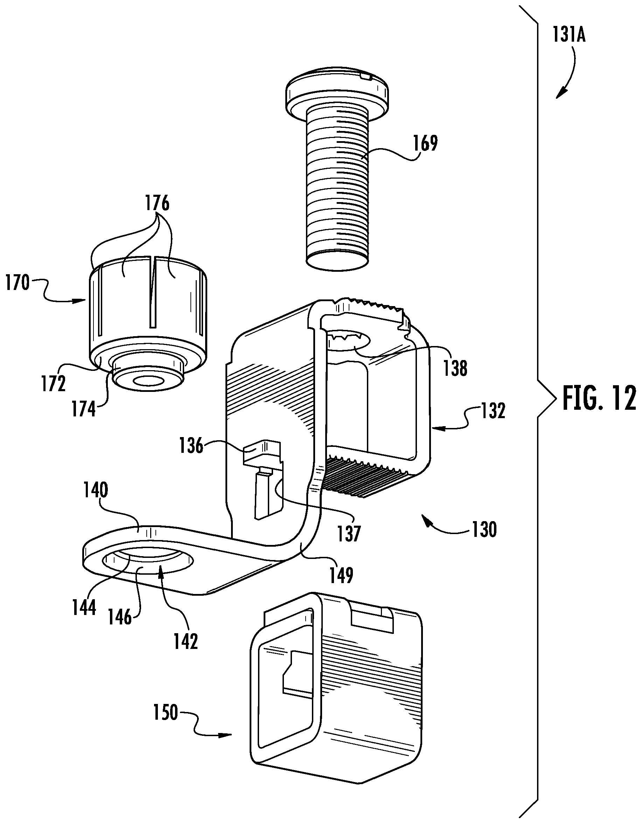

**FIG. 12** illustrates the configuration of the socket connector **170** prior to being orbital riveted. As is known in the art, in the orbital riveting process a forming tool (peen) is gradually lowered into the flange **174** and thereby spreads the material of the flange **174** into the chamfer recess **146** and into the shape of the deformed portion **179.**

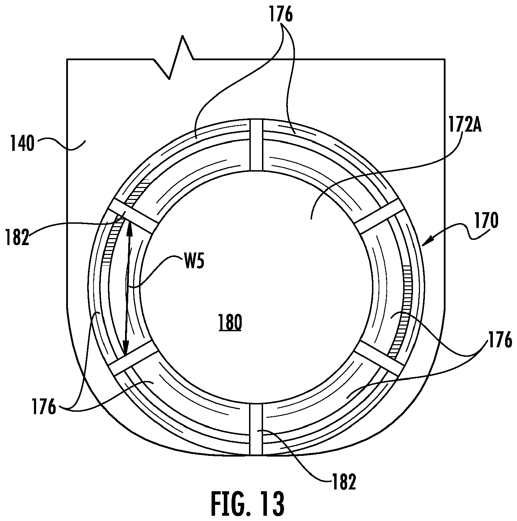

According to some embodiments, the length **L5** (**FIG. 19**) of each finger **176** is in the range of from about 3 mm to 20 mm. According to some embodiments, the thickness **T5** (**FIG. 19**) of each finger **176** is in the range of from about 0.5 mm to 3 mm. According to some embodiments, the width **W5** (**FIG. 13**) of each finger **176** is in the range of from about 1 mm to 10 mm. According to some embodiments, the depth **H5** of the socket **180** is in the range of from about 3 mm to 20 mm.

According to some embodiments of each ramped inner shoulder surface **177B** forms an oblique angle relative to the central axis of the socket **180.** In some embodiments, the angle is in the range of from about 5 degrees to 45 degrees.

According to some embodiments of each slot **182** is in the range of from about 0.2 mm to 2 mm.

In other embodiments, there may be more or fewer than six fingers **176.**

The socket connector **170** (including the fingers **176**) is electrically conductive. In some embodiments, the socket connector **170** is formed of metal. Suitable metals may include an alloy of copper such as CuZn. In some embodiments, the socket connector **170** is unitary and, in some embodiments, the socket connector **170** is monolithic.

The bullet connector **280A** will be described in more detail hereinbelow. The bullet connector **280B** may be constructed and operated in the same manner as the bullet connector **280A,** and it will therefore be appreciated that the description below likewise applies to the bullet connector **280B.**

The bullet connector **280A** extends from a base end **283A** to a free end **283B.** The bullet connector **280A** includes a post body **282,** an integral mount flange **286,** and an integral radial flange **284.**

The post body **282** has an end face **282A** at the free end **283B** and a generally cylindrical outer sidewall surface **282B.** A tapered, rounded, ramped or frusto-conical shoulder **282C** extends axially between the end face **282A** and the sidewall surface **282B.**

The radial flange **284** is annular and projects radially outwardly from the sidewall surface **282B** a distance **D6** (**FIG. 19**). According to some embodiments, the distance **D6** is in the range of from about 0 mm to 5 mm.

The mount flange **286** is annular and is located on the base end **283A.** An end bore **288** extends through the mount flange **286** and into the post body **282.**

The bullet connector **280A** is secured or affixed directly to the tab **220C** of the associated carrier contact member **220** by the mount flange **286.** In some embodiments and as shown, the mount flange **286** is seated in the hole **220F** and is orbital riveted to the tab **220C.** More particularly, an integral, annular deformed portion **289** of the flange **286** is formed by an orbital riveting technique or apparatus and fills the chamfer recess **220G.** The outer diameter of the deformed portion **289** is greater than the diameter of the inner edge **220I,** so that the deformed portion **289** prevents the bullet connector **280A** from being displaced from the hole **220F.** In some embodiments, the orbital riveting process is executed such that the radial flange **284** fits flush or tightly against the facing surface of the tab **220C.**

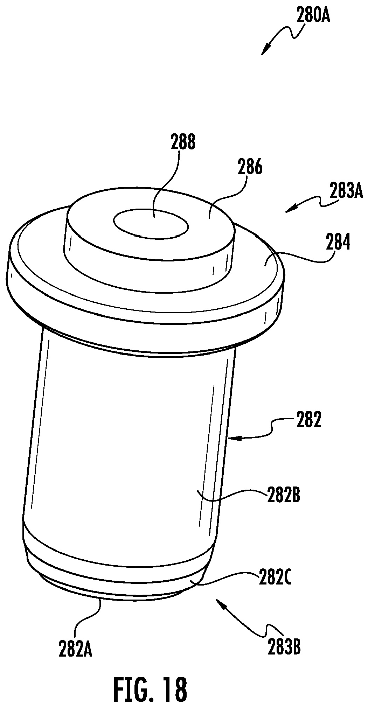

**FIG. 18** illustrates the configuration of the bullet connector **280A** prior to being orbital riveted. As is known in the art, in the orbital riveting process the forming tool (peen) is gradually lowered into the flange **286** and thereby spreads the material of the flange **286** into the recess **220G** and into the shape of the deformed portion **289.**

According to some embodiments, the length **L7** (**FIG. 19**) of the post body **282** from the radial flange **284** to the end face **282A** is in the range of from about 5 mm to 40 mm. According to some embodiments, the length **L7** is in the range of from about 90 to 100 percent of the depth **D5** of the associated socket **180.**

According to some embodiments, the outer diameter **D7** (**FIG. 19**) of the post body **282** is in the range of from about 8 mm to 8.02 mm. According to some embodiments, the outer diameter **D7** is in the range of from about 102 to 103 percent of the inner diameter **D5** (**FIG. 19**) of the associated socket **180** when the fingers **176** are relaxed.

The bullet connector **280A** is electrically conductive. In some embodiments, the bullet connector **280A** is formed of metal. Suitable metals may include copper alloys such as CuZn. In some embodiments, the bullet connector **280A** is unitary and, in some embodiments, the bullet connector **280A** is monolithic.

The system **101** may be used as follows in accordance with methods of the present invention.

The base **110** is mounted on the DIN rail **10** as shown in **FIG. 1****.** The DIN rail **10** is received in the channel **117** and secured by the hooks **118A** and the latch mechanism **118B.**

Cables **20, 22** (shown in dashed line) are inserted through the cable ports **124** and secured in the clamp connectors **133.** In some embodiments, the cable **20** is connected to Neutral (N) and the cable **22** is connected to Protective Earth (PE)

More particularly, the end of the electrical conductor (which is bare of insulation and exposed) of each cable **20** is inserted into the cavity **151** of the cage member **150.** The screw **169** is then forcibly rotated to pull the wall **152A** of the cage member **150** forward toward the wall **134A.** The end of the cable **20** is thereby clamped between the walls **152A, 134A** to directly mechanically and electrically connect the cable **20, 22** to the cable termination portion **132** of the connector assembly **131A, 131B.** A remote control wire or connector (not shown) may be inserted into the port **125** and secured to the cable termination portion **132** by clamping between the head of the screw **169** and the wall **134B.**

The module **200** is then axially plugged or inserted into the receiver slot **116** in an insertion direction **R** along the axis **A-A** through the front opening **120.** The module **200** is pushed back into the receiver slot **120** until the rear end of the module **200** substantially engages the front side of the rear housing section **112A,** as shown in **FIGS. 1** and **4****.**

Insertion of the module **200** into the slot **116** causes the post body **282** of each bullet connector **280A, 280B** to be inserted into the socket **180** of the corresponding socket connector **170** along an insertion axis **I-I** until the post body **282** is seated in the socket **180** as shown in **FIGS. 4** and **19****.** In some embodiments, the central axis of each post body **282** is substantially concentric with the central axis of the socket **180** within which it is seated.

Because the outer diameter **D7** of each post body **282** is greater than the relaxed (nondeflected) inner diameter **D5** of its socket **180,** one or more of the fingers **176** of the socket **180** are deflected radially outwardly. The deflection may include bending at their joints with the socket body **172** and/or bending along the lengths of the fingers **176.** The ramped surfaces **177B** of the bodies **282** and fingers **176** facilitate alignment between the components **282, 176** and deflection of the fingers **176.**

According to some embodiments, the average distance of displacement or deflection of the fingers **176** is in the range of from about 0.03 mm to 0.05 mm. According to some embodiments, the finger deflection is resilient or elastic so that the fingers **176** continue to exert a persistent, radially inwardly compressive load on the post body **282.** According to some embodiments, this compressive load is in the range of from about 10N to 20N.

In some embodiments, the module **200** is configured such that the end face **282A** of each post body **282** will contact the bottom wall **172A** of the receiving socket connector **170** when the module **200** is fully inserted into the receiver slot **116.** In some embodiments, each post body **282** extends outwardly beyond the fingers **176** of the receiving socket connector **170** a distance in the range of from about 0 mm to 0.5 mm when the module **200** is fully inserted into the receiver slot **120.**

Because the fail-safe mechanism **201** is in its ready position, the indicator member **250** is held in a retracted position (**FIGS. 4****,** **6** and **7**) by the latch fingers **242B, 244B.** Additionally, when the module **200** is inserted into the receiver slot **120,** the remote control pin **122** is thereby inserted into and extends through the port **218** but is depressed by the indicator strip **270** that covers the port **218.** The module **200** thereby provides feedback through the depressed remote control pin **122** that the module **200** has been seated in the base **110** and the module **200** is in its ready or operational (non-failed) condition.

With the module **200** seated in the receiver slot **120,** the lock member **114C** is rotated into a locking position as shown in **FIGS. 1** and **4****.**

The module **200** can be released and removed from the base **110** by executing a reverse of the foregoing procedure. The foregoing steps of mounting and removing the module **200** or other suitably configured modules in and from base **110** can be repeated multiple times. For example, in the event that the GDT **222** of the module **200** is degraded or destroyed or no longer of proper specification for the intended application, the module **200** can be replaced with a fresh or suitably constructed module.

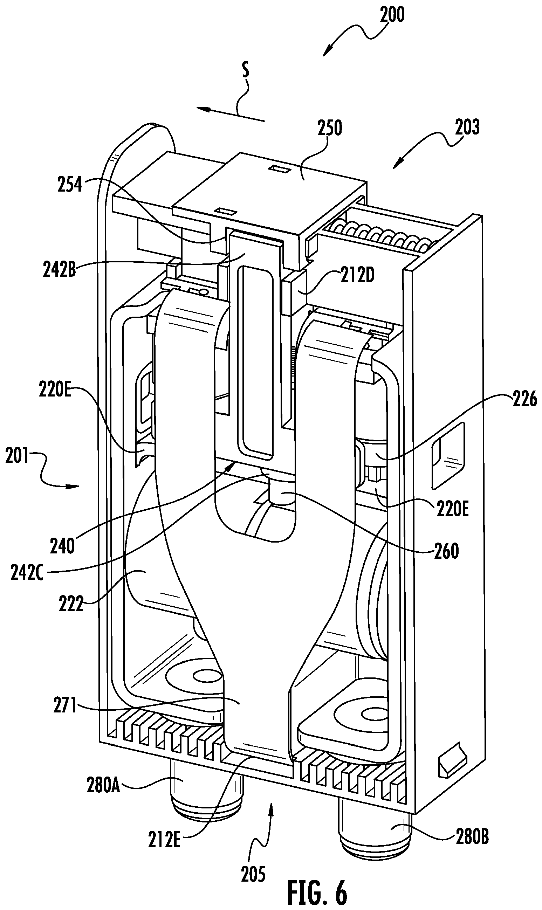

During normal operation, the module **200** operates as an open circuit between the neutral cable **20** and the PE cable **22.** The shorting bar **226** remains in a ready position (**FIGS. 4** and **6**) spaced apart and electrically isolated from the carrier contact members **220.** In the event of a transient overvoltage or surge current in, for example, one of the lines, protection of power system load devices may necessitate providing a current path to ground for the excess current of the surge current. The surge current may generate a transient overvoltage the neutral cable **20** and the PE cable **22,** which may overcome the isolation of the GDT **222.** The GDT **222** will then allow the excess current to flow from the neutral cable **20,** through the base terminal connector assembly **131A** and the socket member **170** thereof, through the bullet connector **280A,** through the first carrier contact member **220,** through the GDT **222,** through the opposing carrier contact member **220,** through the bullet connector **280B,** through the base terminal connector assembly **131B** and the socket member **170** thereof, and to the protective earth cable **22.**

In the event the GDT **222** is damaged (*e.g*., caused by a lightning current or a lightning current and a follow on current from the power source), the GDT **222** may ohmically generate heat. Absent the fail-safe mechanism **201,** if the follow current were permitted to continue unabated, the GDT **222** may fail catastrophically. However, the fail-safe mechanism **201** operates as a thermal switch to bypass the GDT **222** in the event the GDT **222** overheats.

More particularly, when the heat generated by the GDT **222** exceeds a prescribed threshold, the meltable member **260** will melt (*i.e.*, from solid to liquid or viscous). The molten meltable member **260** will be displaced or flow under the force of gravity and the load of the springs **228** on the shorting bar **226.** The molten meltable member **260** may escape around the GDT **222** and/or through the openings **242E, 228B.** With the meltable member **260** no longer holding the shorting bar **226** away from the GDT **222,** the shorting bar **226** is forcibly displaced in a rearward closing direction **C** (**FIG. 4**) toward the GDT **222** and the shorting tabs **220E** by the biasing load of the springs **228.** The shorting bar **226** thereby assumes a shorting position wherein the contact end sections **226C** of the shorting bar **226** are thereby pressed into contact with the shorting tabs **220E.** The shorting bar **226** creates a direct short circuit between the carrier contact members **220** through the shorting bar **226.** In this way, the GDT **222** is electrically bypassed between the cables **20, 22** to provide a short circuit end of life for the module **200.**

The release of the shorting bar **226** as described above also actuates the local alarm mechanism **203.** The trigger assembly **240** is driven in the rearward direction **C** (**FIG. 4**) along with the shorting bar **226** by the springs **228** from the lock position (**FIGS. 4****,** **6** and **7**) to a release position (**FIGS. 8** and **9**). The latch fingers **242B, 244B** are thereby withdrawn from the latch slots **254** of the indicator member **250.** Thus released, the indicator member **250** is then driven by the compressed spring **232** to slide along the rail **212B** in a signaling direction **S** (**FIG. 6**). The indicator member **250** is thereby displaced to an alert position as shown in **FIGS. 8** and **9** wherein the indicator surface **259** is aligned with and visible through the front window **217** of the module housing **112.** The indicator surface **259** has a noticeably different visual appearance through the front window **117** than the housing indicator surface **212C,** providing a visual alert so that an operator can readily determine that the local alert mechanism **203** has been activated. For example, the housing indicator surface **212C** and the indicator surface **259** may have distinctly different colors (*e.g*., green versus red). In this manner, the local alarm mechanism **203** can provide a convenient indication that GDT **222** has failed or overheated and/or the module **200** has assumed its short circuit configuration or state.

The release of the shorting bar **226** as described above also actuates the remote alarm mechanism **205.** In the ready position of the module **200,** the indictor strip **270** covers the rear opening **218** so that the remote pin **122** is maintained compressed. When the meltable member **234** is melted, the ends of the legs **271, 272, 273** of the indicator strip **270** are pulled in the rearward direction **C** along with the trigger assembly **240** by the springs **228.** The indicator strip **270** is thereby slidingly displaced, rotated or revolved through the indicator strip guide slot **212E.** When the trigger assembly **240** assumes its fully released position against the GDT **222** and as shown in **FIGS. 8** and **9****,** the indicator hole **272** will be aligned with the rear opening **218** so that the rear port **218** is no longer covered. The remote pin **122** is thereby permitted to extend further into the module **200** through the opening **218** and the indicator hole **272** to an alarm signal position. The remote pin **122** may be connected to a switch **122A** or sensor in the base **110** that detects the displacement of the remote pin **122** and provides an electrical signal to a remote device or terminal. In this manner, the remote alarm mechanism **205** can provide a convenient remote indication that GDT **222** has failed or overheated and/or the module **200** has assumed its short circuit configuration or state.

The system **101** can provide a number of benefits and advantages. The construction of the connector system **103** facilitates the reliable transmission of high electrical currents (*e.g*., lightning surge currents) between the base **110** and the module **200.** The bullets-shaped post bodies **282** and the complementary socket connectors **170** provide increased connector surface-to-surface contact. This can decrease current flow density at the connector contact interfaces and inhibit or eliminate electrical arcing.

The geometry of the connector components provide terminals that are more stiff and rigid to withstand mechanical forces induced by surge current, and also space efficient.

The closed loop, single part construction of the connector bodies **130** provides an unbroken part for surge current to flow through with maximum cross-section. The key and slot interlock between each key tab **136** and its key slot **137,** as well as the relatively large radius of each bridge portion **149,** can inhibit or prevent bending of the connector bodies **130** due to high current surge flow.

The closed loop, single part construction of each cage member **150** likewise provides an unbroken part for surge current to flow through with maximum cross-section. The interlocks between the key tabs **154** and key slots **158,** straight tabs **156** and straight slots **160,** and the flange **168** and hole **162** can inhibit or prevent bending of the cage member **150** due to high current surge flow. Moreover, these interlocks as well as the double-walled geometry of walls **152D, 152E** can enable the cage member **150** to withstand higher tightening torque to secure the cables **20, 22.**

During a high surge current, the surge may induce a compressive force or deflection in the fingers **176** that causes the fingers **176** to squeeze against the contact surface **282B** of the corresponding post body **282** in the socket **180.**

As discussed above, the socket connectors **170** are affixed to the termination portions **140** and the bullet connectors **280A, 280B** are affixed to the connector mount tabs **220C** by orbital riveting. This technique can provide sufficient strength to reliably secure the components during a surge.

In some embodiments, the contact surfaces of the post bodies **282** and the fingers **176** have a roughness of 0.8 µmRa or less. Such low roughness can ease coupling and decoupling of the connectors **170, 280.** This low roughness can also provide greater contact surface.

In some embodiments, the module **200** is compliant with IEC 61643-11 "Additional duty test for test Class I" for SPDs (Clause 8.3.4.4) based on the impulse discharge current waveform defined in Clause 8.1.1 of IEC 61643-11, typically referred to as 10/350 microsecond ("µs") current waveform ("10/350µs current waveform"). The 10/350µs current waveform may characterize a current wave in which the maximum current (100%) is reached at about 10 µs and the current is 50% of the maximum at about 350 µs. Under 10/350µs current waveform, the transferred charge, Q, and specific energy, W/R, to SPDs should be related with peak current according to one or more standards. For example, the IEC 61643-11 parameters to Class I SPD test are illustrated in Table 1, which follows:

**Table 1 Parameters for Class I SPD Test**

| *I*ᵢₘₚ within 50µs (kA) | Q within 5ms (As) | W/R within 5ms (kJ/Ω) |
|---|---|---|
| 25 | 12,5 | 156 |
| 20 | 10 | 100 |
| 12,5 | 6,25 | 39 |
| 10 | 5 | 25 |
| 5 | 2,5 | 6,25 |
| 2 | 1 | 1 |
| 1 | 0,5 | 0,25 |

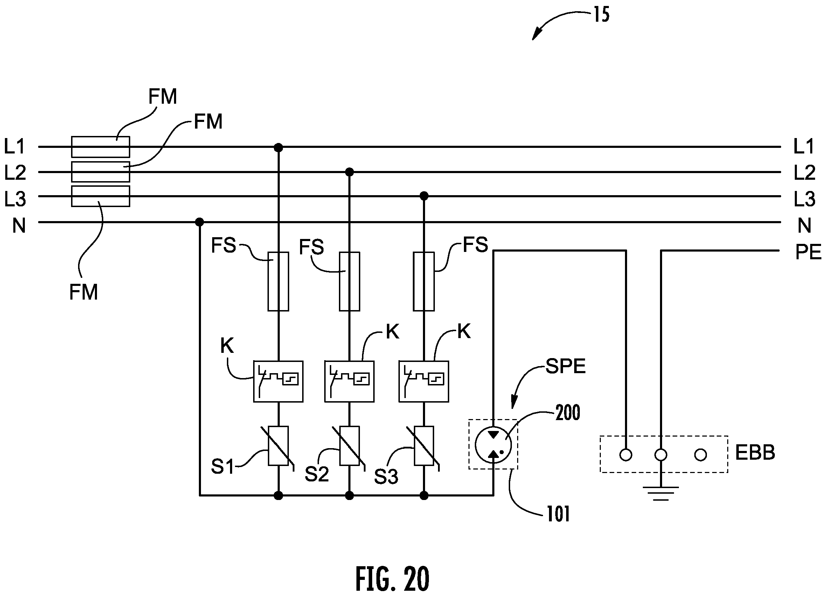

In some embodiments, the module **200** is a Class I surge protective device (SPD). According to some embodiments, the DIN rail device system **101** is used in an application and electrical system as follows. The system **101** is connected between Neutral (N) and Protective Earth (PE) (N-PE) in a three phase system, using a "3+1" configuration. This means that there are three 1TE SPD **S1, S2, S3** modules each connected between a respective line **L1, L2, L3** and N (*i.e.*, L-N) and one SPD module **SPE** connected between **N and PE** (*i.e.*, N-PE), as illustrated in the electrical circuit **15** of **FIG. 20****.** According to some embodiments, one or more of the SPD modules **S1, S2, S3 SPE** is a module constructed as described for the module **200** in a respective system **101** as described herein. In other embodiments, one or more of the SPD modules may be of a different construction than the SPD module as disclosed herein. For example, in some embodiments, the N-PE SPD module **SPE** is a module **200** in a system **101** as disclosed herein, and the L-N SPD modules **S1, S2, S3** are varistor-based SPD modules. The varistor-based SPD modules may be metal-oxide varistor (MOV)-based SPD modules. The varistor-based SPD modules may be constructed as disclosed in one or more of U.S. Patent Nos. 6,038,119, 6,430,020, 7,433,169.

Each line **L1, L2, L3** may be provided with a main fuse **FM** and a supplemental fuse **FS** between the line and its SPD **S1, S2, S3.** A thermal disconnector **K** may also be provided between each line and its SPD **S1, S2, S3.**

In SPD modules located in a "3+1" electrical system as described, in some embodiments the N-PE SPD module must conduct the sum of lightning current (following a 10/350 µs waveform) that is conveyed on each of the four lines (three phases and neutral). So, if the current on each line is 25kA 10/350µs, then each SPD module connected between each line and neutral has to have a withstand capability of 25kA 10/350µs and the N-PE SPD module must have a withstand capability (rating) of 100kA 10/350µs.

It is desirable that the SPD modules have a small form factor. In particular, in some applications it is desirable that the SPD modules each have a size of 1TE according to DIN Standard 43871, published November 1, 1992. According to some embodiments, the module **200** has a maximum width **W9** (**FIG. 1**) parallel to the axis **F1-F1** of about 18 mm. SPD modules configured for DIN rail mounting and designed to meet the requirements discussed above for N-PE placement typically require larger cable terminals than are provided on known 1TE sized SPD modules.

According to some embodiments, the connector system **103** (including the base connector terminal assemblies **131A, 131B** and the bullet connectors **280A, 280B**) can allow the conduction of a 100kA 10/350µs lightning current through the SPD module, without any damage on these terminals. By contrast, conventional terminals used in 1TE SPD modules may be catastrophically damaged (*e.g*., flashes and bending takes place in the base-to-module connectors) when a lightning current of above 50kA goes through connectors.

Further, the thermal fail-safe mechanism **201** bypasses the GDT **222** and allows a short circuit end of life for the module **200** in case of overheating of the GDT **222.** Typically, a GDT overheats when it is damaged internally during a lightning current and there is a follow current from the power source. In the case of a GDT located between N-PE, this current can be significant only in cases of power system faults (line is connected accidentally to ground). If this happens, then the GDT might fail catastrophically due to excess current conduction over a long period of time. Therefore, the fail-safe bypass mechanism **201** may be necessary to provide a safe end of life for the GDT **222.**

In alternative embodiments, the shorting bar **226** is omitted or is formed of an electrically insulting material (*e.g*., plastic) so that when meltable member **260** is melted by overheat of the GDT **222,** the alarm mechanisms **203, 205** are actuated without shorting the carrier contact members **220** around the GDT **222.** In this case, the mechanism is used as a thermal indicator without interfering with the power circuit.

In some embodiments and as shown, the module **200** projects forwardly beyond the front end of the receiver slot **120** a distance in the range of from about 1 to 100 mm.

Modules including fail-safe mechanisms, alarm mechanisms and connector systems as disclosed herein may include an electrical device of a different type in place of the GDT **222.** The electrical device may be an overvoltage protection device of a different type. In some embodiments, the electrical device includes a metal oxide varistor (MOY), a circuit breaker, a fuse, or a diode.

Aspects and embodiments of the invention may be further understood with reference to the following non-limiting numbered clauses:
1. A surge protective device (SPD) module comprising:
   a module housing;
   first and second module electrical terminals mounted on the module housing;
   a gas discharge tube (GDT) mounted in the module housing, the GDT including a first GDT terminal electrically connected to the first module electrical terminal and a second GDT terminal electrically connected to the second module electrical terminal; and
   a fail-safe mechanism mounted in the module housing, the fail-safe mechanism including:
      an electrically conductive shorting bar positioned in a ready position and and repositionable to a shorting position;
      a biasing member applying a biasing load to the shorting bar to direct the shorting bar from the ready position to the shorting position; and
      a meltable member;
      wherein:
         the meltable member maintains the shorting bar in the ready position and melts in response to a prescribed temperature to permit the shorting bar to transition from the ready position to the shorting position under the biasing load of the biasing member; and
         in the shorting position, the shorting bar forms an electrical short circuit between the first and second GDT terminals to bypass the GDT.
2. The SPD module of Clause 1 including:
   a first carrier contact member including a first shorting portion electrically connected to the first GDT terminal; and
   a second carrier contact member including a second shorting portion electrically connected to the second GDT terminal;
   wherein:
      in the ready position, the meltable member holds the shorting bar spaced apart from and electrically isolated from the first and second shorting portions; and
      when the meltable member melts, the biasing member forcibly displaces the shorting bar into contact with each of the first and second shorting portions to form the electrical short circuit between the first and second GDT terminals to bypass the GDT.
3. The SPD module of Clause 1 or Clause 2 wherein:
   the first carrier contact member includes a first GDT mount hole;
   the second carrier contact member includes a second GDT mount hole;
   the first GDT terminal is seated in the first GDT mount hole and secured therein by solder in the first GDT mount hole; and
   the second GDT terminal is seated in the second GDT mount hole and secured therein by solder in the second GDT mount hole.
4. The SPD module of any earlier Clause wherein the meltable member is formed of metal.
5. The SPD module of any earlier Clause wherein the meltable member has a melting point in the range of from about 90° C to 240° C.
6. The SPD module of any earlier Clause including an alarm mechanism responsive to melting of the meltable member to provide an alert that the SPD module has failed.
7. The SPD module of Clause 6 wherein the alarm mechanism includes a local alarm mechanism including:
   a window defined in the module housing;
   an indicator member movable between first and second positions relative to the window;
   an indicator biasing member applying a biasing load to the indicator member to direct the indicator member from the first position to the second position; and
   a trigger member;
   wherein:
      the trigger member retains the indicator member in the first position; and
      when the meltable member melts, the trigger member releases the indicator member to move from the first position to the second position under the biasing load of the indicator biasing member.
8. The SPD module of Clause 6 or Clause 7 wherein the alarm mechanism includes a remote alarm mechanism including:
   a port defined in the module housing to receive a remote control pin; and
   an indicator member having an indicator hole defined therein;
   wherein:
      the indicator member is movable between a first position, wherein the indicator member covers the port, and a second position, wherein the indicator opening is aligned with the port and permits the remote control pin to extend through the indicator opening; and
      when the meltable member melts, the indicator member is moved from the first position to the second position under the biasing load of the biasing member.
9. The SPD module of any earlier Clause wherein the first and second module terminals are bullet connectors.
10. The SPD module of Clause 9 including:
   a first carrier contact member electrically connecting the first GDT terminal to the first module terminal; and
   a second carrier contact member electrically connecting the second GDT terminal to the second module terminal;
   wherein the first module terminal is orbital riveted to the first carrier contact member; and
   wherein the second module terminal is orbital riveted to the second carrier contact member.
11. A DIN rail surge protective device (SPD) system, comprising:
   a base configured to be mounted on a DIN rail, the base defining a receiver slot;
   an SPD module configured to be removably mounted in the receiver slot to form with the base a DIN rail SPD assembly; and
   an electrical connector system to selectively electrically connect the SPD module to the base, the electrical connector system including:
      a socket connector affixed on one of the base and the SPD module, the socket connector defining a socket; and
      a bullet connector on the other of the base and the SPD module, the bullet connector including a post body configured to be received in the socket to electrically and mechanically connect the SPD module to the base.
12. The DIN rail SPD system of Clause 11 wherein the socket and the post body are substantially cylindrical.
13. The DIN rail SPD system of Clause 11 or Clause 12 wherein:
   the socket connector includes a plurality of circumferentially distributed, radially deflectable, electrically conductive contact fingers; and
   the contact fingers define the socket.
14. The DIN rail SPD system of Clause 13 wherein the socket connector includes slots between the contact fingers to permit the contact fingers to deflect independently of one another.
15. The DIN rail SPD system of any one of Clauses 11 - 14 wherein the socket connector is orbital riveted to an electrically conductive terminal support.
16. The DIN rail SPD system of any one of Clauses 11 - 15 wherein the bullet connector is orbital riveted to an electrically conductive terminal support.
17. The DIN rail SPD system of any one of Clauses 11 - 16 wherein the socket connector forms a part of the base.
18. The DIN rail SPD system any one of Clauses 11 - 17 wherein the bullet connector forms a part of the SPD module.
19. The DIN rail SPD system of any one of Clauses 11 - 18 wherein the base includes a base terminal connector assembly including:
   the socket connector;
   a connector body, wherein the socket connector is mounted on the connector body; and
   a cable clamp connector electrically and mechanically joined to the socket connector by the connector body.
20. The DIN rail SPD system of Clause 19 wherein the cable clamp connector includes:
   a cable termination portion of the connector body;
   a cage member; and
   a screw operable to displace the cage member relative to the cable termination portion to clamp a cable therebetween.
21. The DIN rail SPD system of Clause 20 wherein the cable termination portion is monolithic and forms a loop defining a cavity.
22. The DIN rail SPD system of Clause 21 wherein the cable termination portion includes:
   first and second walls;
   a key slot defined in the first wall; and
   an integral key tab extending from the second wall and interlocked with the key slot to inhibit or prevent the first and second walls from separating.
23. The DIN rail SPD system of Clause 21 or Clause 22 wherein the cage member:
   is monolithic;
   forms a loop defining a cavity; and
   surrounds a portion of the cable termination portion.
24. The DIN rail SPD system of Clause 23 wherein the cage member includes:
   first and second walls;
   a key slot defined in the first wall; and
   an integral key tab extending from the second wall and interlocked with the key slot to inhibit or prevent the first and second walls from separating.
25. The DIN rail SPD system of Clause 23 or Clause 24 wherein the cage member includes:
   an inner front wall;
   an outer front wall overlying the inner front wall;
   a hole defined in the outer front wall; and
   an integral, threaded flange on the inner front wall;
   wherein the flange extends into the hole and is threadedly mated with the screw.
26. The DIN rail SPD system of Clause 19 or any clause depending from Clause 19 wherein:
   the connector body includes:
   a cable termination portion;
   a socket connector mount portion on which the socket connector is mounted; and
   a bridge portion connecting the cable termination portion to the socket connector mount portion;
   the connector body is monolithic; and
   the bridge portion has an arcuate cross-sectional profile with an arc radius in the range of from about 5 mm to 6 mm.
27. A surge protective device (SPD) module comprising:
   a module housing;
   first and second module electrical terminals mounted on the module housing;
   a gas discharge tube (GDT) mounted in the module housing, the GDT including a first GDT terminal electrically connected to the first module electrical terminal and a second GDT terminal electrically connected to the second module electrical terminal;
   a trigger member;
   a trigger biasing member;
   a meltable member meltable in response to a prescribed temperature; and
   a local alarm mechanism including:
      a window defined in the module housing;
      an indicator member movable between first and second positions relative to the window; and
      an indicator biasing member applying a biasing load to the indicator member to direct the indicator member from the first position to the second position;
      wherein:
         the meltable member retains the trigger member in a lock position, wherein the trigger member retains the indicator member in the first position; and
         when the meltable member melts, the trigger biasing member forces the trigger member from the lock position to a release position, wherein the trigger member releases the indicator member to move from the first position to the second position under the biasing load of the indicator biasing member.
28. The SPD module of Clause 27 further including a remote alarm mechanism including:
   a port defined in the module housing to receive a remote control pin; and
   an indicator member having an indicator hole defined therein;
   wherein:
      the indicator member is movable between a first position, wherein the indicator member covers the port, and a second position, wherein the indicator opening is aligned with the port and permits the remote control pin to extend through the indicator opening; and
      when the meltable member melts, the indicator member is moved from the first position to the second position under the biasing load of the biasing member.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

## Claims

1. A surge protective device module (200) comprising:
a module housing (210);
first and second module electrical terminals (280A, 280B) mounted on the module housing;
a gas discharge tube (222) mounted in the module housing, the gas discharge tube including a first gas discharge tube terminal (222B) electrically connected to the first module electrical terminal and a second gas discharge tube terminal (222C) electrically connected to the second module electrical terminal; and
a fail-safe mechanism (201) mounted in the module housing, the fail-safe mechanism including:
an electrically conductive shorting bar (226) positioned in a ready position and repositionable to a shorting position;
a biasing member (228) applying a biasing load to the shorting bar to direct the shorting bar from the ready position to the shorting position; and
a meltable member (260);
wherein:
the meltable member (260) maintains the shorting bar (226) in the ready position and melts in response to a prescribed temperature to permit the shorting bar to transition from the ready position to the shorting position under the biasing load of the biasing member (228); and
in the shorting position, the shorting bar (226) forms an electrical short circuit between the first and second gas discharge tube terminals to bypass the gas discharge tube (222).

2. The surge protective device module (200) of Claim 1 including:
a first carrier contact member (220) including a first shorting portion (220E) electrically connected to the first gas discharge tube terminal (222B); and
a second carrier contact member (220) including a second shorting portion (220E) electrically connected to the second gas discharge tube terminal (222C);
wherein:
in the ready position, the meltable member (260) holds the shorting bar (226) spaced apart from and electrically isolated from the first and second shorting portions (220E, 220E); and
when the meltable member (260) melts, the biasing member (228) forcibly displaces the shorting bar (226) into contact with each of the first and second shorting portions to form the electrical short circuit between the first and second gas discharge tube terminals (222B, 222C) to bypass the gas discharge tube.

3. The surge protective device module (200) of Claim 2 wherein:
the first carrier contact member (220) includes a first gas discharge tube mount hole (220B);
the second carrier contact member (220) includes a second gas discharge tube mount hole (220B);
the first gas discharge tube terminal (222B) is seated in the first gas discharge tube mount hole and secured therein by solder (220D) in the first gas discharge tube mount hole; and
the second gas discharge tube terminal (222C) is seated in the second gas discharge tube mount hole and secured therein by solder (220D) in the second gas discharge tube mount hole.

4. The surge protective device module (200) of any preceding claim wherein the meltable member (260) is formed of metal.

5. The surge protective device module (200) of any preceding claim wherein the meltable member (260) has a melting point in the range of from about 90° C to 240° C.

6. The surge protective device module (200) of any preceding claim including an alarm mechanism (203 or 205) responsive to melting of the meltable member (260) to provide an alert that the surge protective device module has failed.

7. The surge protective device module (200) of Claim 6 wherein the alarm mechanism includes a local alarm mechanism (203) including:
a window (217) defined in the module housing;
an indicator member (230) movable between first and second positions relative to the window;
an indicator biasing member (232) applying a biasing load to the indicator member to direct the indicator member from the first position to the second position; and
a trigger member (240);
wherein:
the trigger member (240) retains the indicator member (230) in the first position; and
when the meltable member (260) melts, the trigger member releases the indicator member to move from the first position to the second position under the biasing load of the indicator biasing member.

8. The surge protective device module (200) of Claim 6 wherein the alarm mechanism includes a remote alarm mechanism (205) including:
a port (218) defined in the module housing to receive a remote control pin (122); and
an indicator member (270) having an indicator hole (274) defined therein;
wherein:
the indicator member (270) is movable between a first position, wherein the indicator member covers the port, and a second position, wherein the indicator opening is aligned with the port and permits the remote control pin (122) to extend through the indicator hole (274); and
when the meltable member (260) melts, the indicator member (270) is moved from the first position to the second position under the biasing load of the biasing member (228).

9. The surge protective device module (200) of any preceding claim wherein the first and second module terminals (280A, 280B) are bullet connectors.

10. The surge protective device module (200) of Claim 9 including:
a first carrier contact member (220) electrically connecting the first gas discharge tube terminal (222B) to the first module terminal (280A); and
a second carrier contact member (220) electrically connecting the second gas discharge tube terminal (222C) to the second module terminal (280B);
wherein the first module terminal (280A) is orbital riveted to the first carrier contact member; and
wherein the second module terminal (280B) is orbital riveted to the second carrier contact member.
